# EUROPEAN PATENT APPLICATION

(11) **EP 4 350 168 A1**
(43) Date of publication of application: **10.04.2024**
(21) Application number: 22810904.7
(22) Date of filing: 04.03.2022
(51) Int. Cl.: F16F 9/43, F16F 9/46

(54) **SHOCK ABSORBER AND METHOD FOR MANUFACTURING SHOCK ABSORBER**

(30) Priority: 26.05.2021 JP 2021088437
(71) Applicant: Hitachi Astemo, Ltd., Ibaraki 312-8503 (JP)
(72) Inventor: TAKANO, Masayuki, Hitachinaka-shi, Ibaraki 312-8503 (JP); IGARASHI, Yasuhiro, Hitachinaka-shi, Ibaraki 312-8503 (JP); YAMASHITA, Mikio, Hitachinaka-shi, Ibaraki 312-8503 (JP); UCHIYAMA, Masaaki, Hitachinaka-shi, Ibaraki 312-8503 (JP)
(74) Representative: Hoffmann Eitle
(86) International application number: PCT/JP2022/009334
(87) International publication number: WO 2022/249623

(57) **Abstract**

One aspect of the present invention causes hydraulic fluid to be directly injected from an injection port into a first valve block chamber and a second valve block chamber, thereby allowing air inside a damping force variable mechanism to be smoothly discharged and being able to increase a filling rate of the hydraulic fluid inside a valve block (the damping force variable mechanism).

## Description

### TECHNICAL FIELD

The present invention relates to a shock absorber that adjusts a damping force by controlling a flow of hydraulic fluid according to a movement of a piston, and a method for manufacturing it.

### BACKGROUND ART

PTL 1 discloses a shock absorber in which an extension-side damping force generating mechanism and a compression-side damping force generating mechanism are spaced away from each other along an axial direction of a cylinder (hereinafter referred to as a "conventional shock absorber").

### CITATION LIST

### PATENT LITERATURE

PTL 1: International Publication No. 2018/216716

### SUMMARY OF INVENTION

### TECHNICAL PROBLEM

In a process of manufacturing the conventional shock absorber, a valve block of the extension-side damping force generating mechanism and a valve block of the compression-side damping force generating mechanism are mounted onto an outer tube with the cylinder filled with hydraulic fluid therein, and the hydraulic fluid is injected into the valve blocks after the valve blocks are mounted. Then, in the process of injecting the hydraulic fluid into the valve blocks, the hydraulic fluid flows from the valve block of the extension-side damping force generating mechanism into a reservoir chamber via a communication pipe and the valve block of the compression-side damping force generating mechanism, and therefore air inside the valve block (the damping force generating mechanism) is not discharged and makes it difficult to increase the filling rate of the hydraulic fluid in the valve block. As a result, the air removal takes time and the man-hours increase.

One of objects of the present invention is to provide a shock absorber capable of increasing a filling rate of hydraulic fluid in a valve block and a method for manufacturing the shock absorber.

### SOLUTION TO PROBLEM

A shock absorber according to one aspect of the present invention includes an outer tube, a cylinder provided in the outer tube and filled with hydraulic fluid therein, an annular reservoir provided between the cylinder and the outer tube and sealingly containing the hydraulic fluid and gas therein, a piston slidably provided in the cylinder and partitioning an inside of the cylinder into two chambers, a first cylinder chamber and a second cylinder chamber, a piston rod having one end at which the piston is provided and an opposite end side protruding out of the cylinder, a valve block provided on an outer surface of the outer tube and hollowly formed therein, a damping force variable mechanism partitioning an inside the valve block into two hydraulic chambers, a first valve block chamber and a second valve block chamber, and configured to generate a damping force by controlling a flow of the hydraulic fluid that is generated due to a movement of the piston, a first communication passage establishing communication between the first cylinder chamber and the first valve block chamber, a second communication passage establishing communication between the second cylinder chamber and the second valve block chamber, a third communication passage establishing communication between an outer surface of the valve block and the first valve block chamber or the second valve block chamber, a first check valve provided in the third communication passage and configured to permit a flow of the hydraulic fluid from the outer surface of the valve block to the first valve block chamber, and a second check valve provided in the third communication passage and configured to permit a flow of the hydraulic fluid from the outer surface of the valve block to the second valve block chamber.

One aspect of the present invention is a method for manufacturing a shock absorber including an outer tube, a cylinder provided in the outer tube and filled with hydraulic fluid therein, an annular reservoir provided between the cylinder and the outer tube and sealingly containing the hydraulic fluid and gas therein, a piston slidably provided in the cylinder and partitioning an inside of the cylinder into two chambers, a first cylinder chamber and a second cylinder chamber, a piston rod having one end at which the piston is provided and an opposite end side protruding out of the cylinder, a valve block provided on an outer surface of the outer tube and hollowly formed therein, a damping force variable mechanism partitioning an inside the valve block into two hydraulic chambers, a first valve block chamber and a second valve block chamber, and configured to generate a damping force by controlling a flow of the hydraulic fluid that is generated due to a movement of the piston, a first communication passage establishing communication between the first cylinder chamber and the first valve block chamber, a second communication passage establishing communication between the second cylinder chamber and the second valve block chamber, a third communication passage establishing communication between an outer surface of the valve block and the first valve block chamber or the second valve block chamber, a first check valve provided in the third communication passage and configured to permit a flow of the hydraulic fluid from the outer surface of the valve block to the first valve block chamber, and a second check valve provided in the third communication passage and configured to permit a flow of the hydraulic fluid from the outer surface of the valve block to the second valve block chamber. The method for manufacturing the shock absorber includes mounting the cylinder and the valve block into or onto the outer tube, mounting the damping force variable mechanism into the valve block, and injecting the hydraulic fluid via the third communication passage into the valve block.

According to the one aspect of the present invention, a shock absorber capable of increasing a filling rate of hydraulic fluid in a valve block and a method for manufacturing the shock absorber can be provided.

### BRIEF DESCRIPTION OF DRAWINGS

Fig. 1 is a conceptual diagram of a shock absorber according to a first embodiment, and a cross-sectional view taken along an axial plane.
Fig. 2 is an enlarged view of a valve block illustrated in Fig. 1.
Fig. 3 is a conceptual diagram of a shock absorber according to a second embodiment, and a cross-sectional view taken along an axial plane.

### DESCRIPTION OF EMBODIMENTS

### (First Embodiment) A first embodiment of the present invention will be described with reference to the attached drawings.

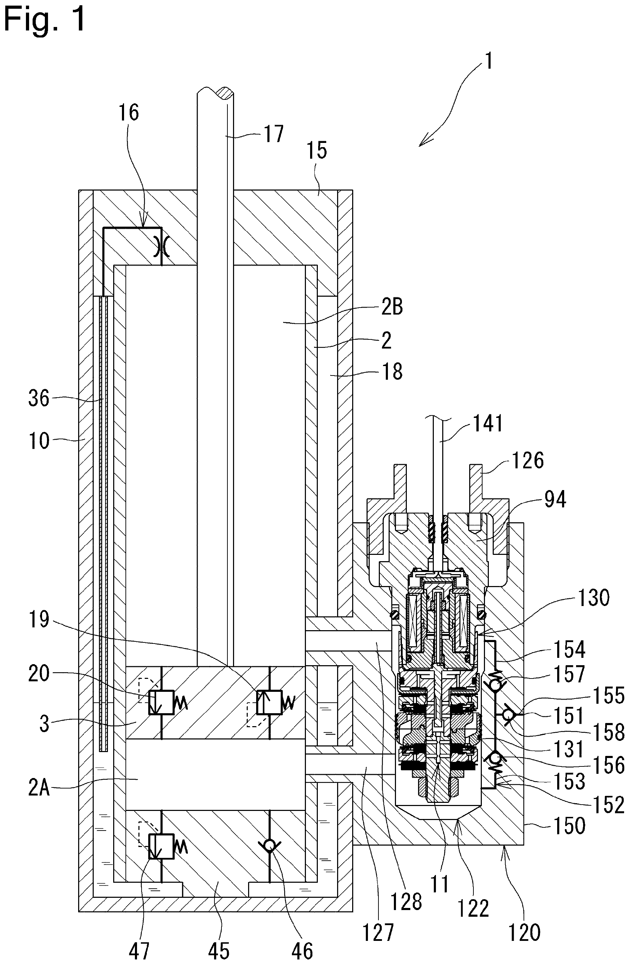

Fig. 1 conceptually illustrates a shock absorber 1 according to the first embodiment. For convenience, the vertical direction in Fig. 1 will be referred to as a "vertical direction" herein simply. The shock absorber 1 is a bi-flow type hydraulic shock absorber disposed upright between a vehicle body and a bogie of a railway train (not illustrated).

As illustrated in Fig. 1, the shock absorber 1 has a twin-tube structure including an outer tube 10 provided outside a cylinder 2. A reservoir 18 (a reservoir chamber) is provided between the cylinder 2 and the outer tube 10. Hydraulic fluid is sealingly contained in the cylinder 2, and hydraulic fluid and gas are sealingly contained in the reservoir 18. A piston 3 is slidably fitted in the cylinder 2. The piston 3 partitions the inside of the cylinder 2 into a first cylinder chamber 2A (a lower chamber) and a second cylinder chamber 2B (an upper chamber).

The lower end (one end) of a piston rod 17 is fixed to the piston 3. The piston rod 17 extends through the second cylinder chamber 2B, and the upper end side (the opposite end side) thereof is inserted through a rod guide 15 and protrudes out of the cylinder 2. An orifice passage 16 is provided in the rod guide 15. One end of the orifice passage 16 is opened to the second cylinder chamber 2B, and the opposite end thereof is connected to the upper end of a reservoir pipe 36. The lower end of the reservoir pipe 36 is opened to inside the hydraulic fluid in the reservoir 18.

A pressure control valve 19 is provided to the piston 3. The pressure control valve 19 is opened according to an increase in the pressure of the hydraulic fluid on the first cylinder chamber 2A side to a set pressure, and releases the pressure of the hydraulic fluid on the first cylinder chamber 2A side to the second cylinder chamber 2B side. On the other hand, a pressure control valve 20 is provided to the piston. The pressure control valve 20 is opened according to an increase in the pressure of the hydraulic fluid on the second cylinder chamber 2B side to a set pressure, and releases the pressure of the hydraulic fluid on the second cylinder chamber 2B side to the first cylinder chamber 2A side.

A base valve 45 is provided at the lower end portion of the cylinder 2. The base valve 45 separates the first cylinder chamber 2A and the reservoir 18 from each other. A check valve 46 is provided to the base valve 45. The check valve 46 permits a flow of the hydraulic fluid from the reservoir 18 to the first cylinder chamber 2A. A pressure control valve 47 is provided to the base valve 45. The pressure control valve 47 is opened according to an increase in the pressure of the hydraulic fluid on the first cylinder chamber 2A side to a set pressure, and releases the pressure of the hydraulic fluid on the first cylinder chamber 2A side to the reservoir 18.

A valve block 120 is provided on an outer surface 44 of the outer tube 10. The valve block 120 is hollowly formed therein. A recessed portion 121 is provided to the valve block 120. The recessed portion 121 is opened at the upper end thereof. The recessed portion 121 has a central line in parallel with a central line of the cylinder 2, and is circular in cross-section taken along a plane perpendicular to the central line. A cylinder 122 is provided in the valve block 120. The cylinder 122 shares a central line (an axial line) with the recessed portion 121. In other words, the central line of the cylinder 122 extends in parallel with the central line of the cylinder 2.

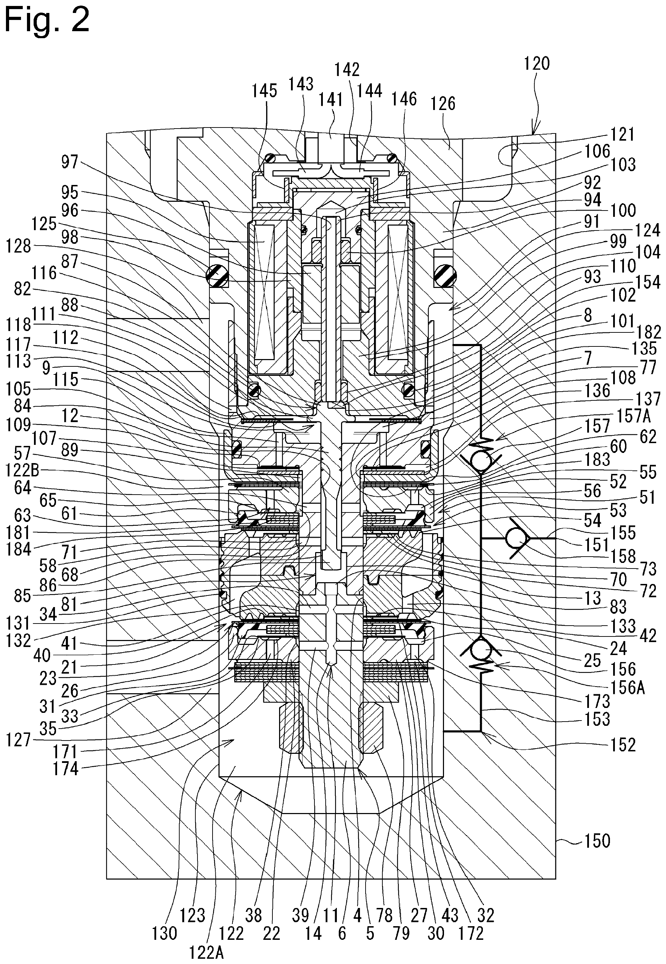

As illustrated in Fig. 2, the cylinder 122 includes a small-diameter portion 123 and a large-diameter portion 124. The small-diameter portion 123 is closed at the lower end thereof. The larger-diameter portion 124 is opened at the upper end thereof to the bottom surface of the recessed portion 121. The cylinder 122 is closed by a yoke 94 mounted in the opening of the upper end of the large-diameter portion 124. An annular seal member 125 seals between the yoke 94 and the cylinder 122 (the large-diameter portion 124). The yoke 94 is fixed to the valve block 120 by tightening a cylindrical fixation member 126 threadedly engaged with the recessed portion 121.

A damping force variable mechanism 130 is provided in the valve block 120. The damping force variable mechanism 130 generates a damping force by controlling a flow of the hydraulic fluid that is generated due to a movement of the piston 3. The damping force variable mechanism 130 includes a piston 131 (a valve block piston). The piston 131 is fitted in the small-diameter portion 123 of the cylinder 122, and partitions the inside of the cylinder 122 into two hydraulic chambers, a first valve block chamber 122A (a lower chamber) and a second valve block chamber 122B (an upper chamber). As illustrated in Fig. 1, the first valve block chamber 122A is in communication with the first cylinder chamber 2A via a first communication passage 127. The second valve block chamber 122B is in communication with the second cylinder chamber 2B via a second communication passage 128.

As illustrated in Fig. 2, passages 132 and 133 are provided in the piston 131. The passages 132 and 133 establish communication between the first valve block chamber 122A and the second valve block chamber 122B. A shaft portion 6 of a piston bolt 5 is inserted through an axial hole 4 of the piston 131. The piston bolt 5 includes a head portion 7 and a cylindrical portion 8. The head portion 7 is provided at the upper end of the shaft portion 6. The cylindrical portion 8 is formed on the outer peripheral edge portion of this head portion 7. The cylindrical portion 8 is opened on the upper end side thereof, and has a larger outer diameter than the head portion 7. A first valve mechanism 51 is provided on the upper end side of the piston 131. The first valve mechanism 51 controls a flow of the hydraulic fluid in the passage 132. On the other hand, a second valve mechanism 21 is provided on the lower end side of the piston 131. The second valve mechanism 21 controls a flow of the hydraulic fluid in the passage 133.

The first valve mechanism 51 includes a bottomed cylindrical first pilot case 52 attached to the shaft portion 6 of the piston bolt 5. The first pilot case 52 includes a bottom portion 57, and a cylindrical portion 56 opened on the piston 131 side thereof. A first main valve 53 is provided on the piston 131 side of the first pilot case 52. A first back-pressure chamber 55 is formed inside the cylindrical portion 56 of the first pilot case 52.

The first valve mechanism 51 includes a seat portion 54. The seat portion 54 is formed on the outer peripheral side of the upper end surface of the piston 131, and the first main valve 53 is in abutment with the seat portion 54 in a seatable and separable manner. The first back-pressure chamber 55 is formed between the first pilot case 52 and the back surface of the first main valve 53. The pressure in the first back-pressure chamber 55 is applied to the first main valve 53 in a valve-closing direction. The first main valve 53 is a packing valve in which an annular packing 61 made of an elastic member is in contact with the inner peripheral surface of the cylindrical portion 56 of the first pilot case 52 over the entire circumference thereof.

The first back-pressure chamber 55 is in communication with the second valve block chamber 122B via passages 62 formed in the bottom portion 57 of the first pilot case 52 and a sub valve 60. The sub valve 60 is opened when the pressure in the first back-pressure chamber 55 reaches a predetermined pressure, and applies a resistance force to a flow of the hydraulic fluid directed from the first back-pressure chamber 55 to the second valve block chamber 122B.

The first back-pressure chamber 55 is in communication with pressure-receiving chambers 182 formed between the first pilot case 52 and the sub valve 60 via the passages 62. The pressure-receiving chambers 182 are each defined in a fan-like form by a plurality of seat portions 183 provided on the upper end surface of the first pilot case 52. The passages 62 are opened on the inner sides with respect to the plurality of seat portions 183, respectively.

The hydraulic fluid is introduced from the first cylinder chamber 2A (the lower chamber) into the first back-pressure chamber 55 via the first communication passage 127, the first valve block chamber 122A, the passage 132, a cutout (not labeled) constituting an orifice formed on the outer peripheral edge portion of s disk valve 70, cutouts 72 of the piston 131, an annular passage 71, a radial passage 58, an axial passage 12, a radial passage 64, a width-across-flats portion 77 formed on the shaft portion 6 of the piston bolt 5, an annular passage 68, and a cutout (not labeled) constituting an orifice formed on the inner peripheral edge portion of a check valve 63.

An annular seat portion 65 is provided on the lower end surface of the first pilot case 52. The seat portion 65 defines an annular pressure-receiving chamber 184 provided on the outer periphery of the inner peripheral portion of the bottom portion 57. A first back-pressure introduction passage, which establishes communication between the second valve block chamber 122B and the first back-pressure chamber 55, is formed in the first valve mechanism 51. The first back-pressure introduction passage allows the hydraulic fluid in the second valve block chamber 122B to be introduced into the first back-pressure chamber 55 via a back-pressure introduction passage 181 and the check valve 63.

On the other hand, the second valve mechanism 21 includes a bottomed cylindrical second pilot case 22 attached to the shaft portion 6 of the piston bolt 5. The second pilot case 22 includes a bottom portion 27, and a cylindrical portion 26 opened on the piston 131 side thereof. A second main valve 23 is provided on the piston 131 side of the second pilot case 22. A second back-pressure chamber 25 is formed inside the cylindrical portion 26 of the second pilot case 22.

The second valve mechanism 21 includes a seat portion 24. The seat portion 24 is formed on the outer peripheral side of the lower end surface of the piston 131, and the second main valve 23 is in abutment with the seat portion 24 in a seatable and separable manner. The second back-pressure chamber 25 is formed between the second pilot case 22 and the back surface of the second main valve 23. The pressure in the second back-pressure chamber 25 is applied to the second main valve 23 in a valve-closing direction. The second main valve 23 is a packing valve in which an annular packing 31 made of an elastic member is in contact with the inner peripheral surface of the cylindrical portion 26 of the second pilot case 22 over the entire circumference thereof.

The second back-pressure chamber 25 is in communication with the first valve block chamber 122A via passages 32 formed in the bottom portion 27 of the second pilot case 22 and a sub valve 30. The sub valve 30 is opened when the pressure in the second back-pressure chamber 25 reaches a predetermined pressure, and applies a resistance force to a flow of the hydraulic fluid directed from the second back-pressure chamber 25 to the first valve block chamber 122A.

The second back-pressure chamber 25 is in communication with pressure-receiving chambers 172 formed between the second pilot case 22 and the sub valve 30 via the passages 32. The pressure-receiving chambers 172 are each defined in a fan-like form by a plurality of seat portions 173 provided on the lower end surface of the second pilot case 22. The passages 32 are opened on the inner sides with respect to the plurality of seat portions 173, respectively.

The hydraulic fluid is introduced from the second cylinder chamber 2B (the upper chamber) into the second back-pressure chamber 25 via the second communication passage 128, the second valve block chamber 122B, the passage 133, a cutout (not labeled) constituting an orifice formed on the outer peripheral edge portion of a disk valve 40, cutouts 42 of the piston 131, an annular passage 41, a radial passage 34, an axial passage 14, a radial passage 39, an annular passage 38, and a cutout (not labeled) constituting an orifice formed on the inner peripheral edge portion of a check valve 33.

An annular seat portion 35 is provided on the upper end surface of the second pilot case 22. The seat portion 35 defines an annular pressure-receiving chamber 174 provided on the outer periphery of the inner peripheral portion of the bottom portion 27. A second back-pressure introduction passage, which establishes communication between the first valve block chamber 122A and the second back-pressure chamber 25, is formed in the second valve mechanism 21. The second back-pressure introduction passage allows the hydraulic fluid in the first valve block chamber 122A to be introduced into the second back-pressure chamber 25 via a back-pressure introduction passage 171 and the check valve 33.

An axial force is generated on the valve members constituting the first valve mechanism 51 and the second valve mechanism 21 by tightening a nut 78 attached to a threaded portion (not labeled) of the shaft portion 6 of the piston bolt 5 to press these valve members between the head portion 7 of the piston bolt 5 and a washer 79.

A control passage 11 is formed in the piston bolt 5 (a shaft member). The control passage 11 includes the axial passage 12, an axial passage 13, and the axial passage 14. The upper end of the axial passage 12 is opened to an end surface 9 of the head portion of the piston bolt 5. The lower end of the axial passage 12 is opened to the axial passage 13. The upper end of the axial passage 14 is opened to the axial passage 13. The inner diameter of the control passage 11 is maximized at the axial passage 13, and is minimized at the axial passage 14. The shaft portion 6 of the piston bolt 5 is configured vertically dividably, and the axial passage 14 is formed in the lower-side portion of the shaft portion 6.

The control passage 11 includes the radial passage 34 in communication with the axial passage 14. The control passage 11 includes the radial passage 39 in communication with the radial passage 34 via the axial passage 14. The second back-pressure chamber 25 is in communication with the axial passage 34 via the orifice (not labeled) provided on the inner peripheral portion of the check valve 33, the annular passage 38 formed on the inner peripheral portion of the bottom portion 27 of the second pilot case 22, the radial passage 39, and the axial passage 14.

The radial passage 34 is in communication with the passage 133 via the annular passage 41 formed at the lower end portion of the axial hole 4 of the piston 131, the plurality of cutouts 42 formed on the inner peripheral portion of the piston 131, and the disk valve 40 provided on the piston 131. The disk valve 40 is in abutment with an annular seat portion 43 in a seatable and separable manner. The seat portion 43 is provided on the inner peripheral side of the piston 131 with respect to the seat portion 24 and the opening of the passage 133. The disk valve 40 is a check valve that permits a flow of the hydraulic fluid from the radial passage 34 to the passage 133. The cutout (not labeled) constituting the orifice is formed on the outer peripheral edge portion of the disk valve 40.

On the other hand, the first back-pressure chamber 55 is in communication with the radial passage 64 formed in the shaft portion 6 of the piston bolt 5 via the orifice (not labeled) provided on the inner peripheral portion of the check valve 63, the annular passage 68 formed on the inner peripheral portion of the bottom portion 57 of the first pilot case 52, and the width-across-flats portion 77 formed on the shaft portion 6 of the piston bolt 5.

The radial passage 64 is in communication with the passage 132 via the axial passage 12, the radial passage 58 formed in the shaft portion 6 of the piston bolt 5, the annular passage 71 formed at the upper end portion of the axial hole 4 of the piston 131, the plurality of cutouts 72 formed on the inner peripheral portion of the piston 131, and the disk valve 70 provided on the piston 131. The disk valve 70 is in abutment with an annular seat portion 73 in a seatable and separable manner. The seat portion 73 is provided on the inner peripheral side of the piston 131 with respect to the seat portion 54 and the opening of the passage 132. The disk valve 70 is a check valve that permits a flow of the hydraulic fluid from the radial passage 58 to the passage 132. The cutout (not labeled) constituting the orifice is formed on the outer peripheral edge portion of the disk valve 70.

A flow of the hydraulic fluid in the control passage 11 is controlled by a pilot valve 81 (a pilot control valve). The pilot valve 81 includes a valve spool 82 and a seat portion 83. The valve spool 82 is slidably provided in the control passage 11. The seat portion 83 is formed on the circumferential edge of the opening of the axial passage 14. The valve spool 82 is made of a solid shaft, and includes a slidable portion 84 and a valve body 85. The slidable portion 84 is inserted in the axial passage 12. The valve body 85 is in abutment with the seat portion 83 in a seatable and separable manner.

A spring bearing 88 shaped like an outer flange is formed on a head portion 87 of the valve spool 82. The inner peripheral portion of a spring disk 113 is connected to the spring bearing 88. The spring disk 113 biases the valve body 85 in a valve-opening direction. Due to the biasing force of the spring disk 113, the head portion 87 of the valve spool 82 is placed in abutment with (is pressed against) a lower end surface 93 (not labeled) of an actuation rod 92 of a solenoid 91.

A bottomed cylindrical cap 115 is attached to the head portion 7 of the piston bolt 5. The cap 115 is opened at the upper end side thereof. An annular seal member 102 seals between the cap 115 and the head portion 7 of the piston bolt 5. An annular second chamber 136 is formed between the cap 115 and the head portion 7 of the piston bolt 5. An insertion hole 89 is provided to the cap 115. The shaft portion 6 of the piston bolt 5 is inserted through the insertion hole 89. The insertion hole 89 is in communication with the width-across-flats portion 77 formed on the shaft portion 6.

A spool back-pressure relief valve 107, a spacer 108, and a retainer 137 are provided between the cap 115 and the head portion 7 of the piston bolt 5 in this order starting from the head portion 7 side (the upper side). The spool back-pressure relief valve 107, the spacer 108, and the retainer 137 are provided in the second chamber 136. The spool back-pressure relief valve 107 is a check valve that permits a flow of the hydraulic fluid from a first chamber 135, which is bottomed on the end surface 9 of the head portion 7 of the piston bolt 5, to the second chamber 136 via a passage 105 formed in the head portion 7. The outer peripheral edge portion of the spool back-pressure relief valve 107 is in abutment with an annular seat portion 109 in a seatable and separable manner. The seat portion 109 is formed on the head portion 7 of the piston bolt 5.

A fail-safe valve 111 is constructed in the first chamber 135. The fail-safe valve 111 includes a disk 112 (a valve seat). The spring bearing 88 (a valve body) of the head portion 87 of the valve spool 82 is in abutment with the disk 112 in a seatable and separable manner. The outer peripheral edge portions of the disk 112 and the spring disk 113 are held between the head portion 7 of the piston bolt 5 and a core 99 of the solenoid 91. The core of the solenoid 91 is constituted by an upper-side core 98 and the lower-side core 99 vertically (axially) divided via a holder 104.

The valve body 85 of the valve spool 82 includes a cutout 86, with which the valve body 85 forms an orifice by being fitted to the axial passage 12. When a control current applied to a coil 95 of the solenoid 91 is 0 A (at the time of a failure), the valve spool 82 is moved in a direction for opening the pilot valve 81 (the upward direction in Fig. 2), and the valve body 85 is fitted in the axial passage 12.

On the other hand, when power is applied to the coil 95 of the solenoid 91, the valve body 85 of the valve spool 82 is seated on the seat portion 83, and the pilot valve 81 is closed. When the pilot valve 81 is in the closed state, in the valve spool 82, the valve body 85 receives a pressure on the axial passage 14 side over a circular pressure-receiving surface having an area equal to the opening area of the axial passage 14, while the slidable portion 84 receives a pressure on the axial passage 12 side over an annular pressure-receiving surface having an area equal to an area calculated by subtracting the cross-sectional area of a neck portion (not labeled) of the valve body 85 from the cross-sectional area of the slidable portion 84.

Now, the valve-opening pressure of the pilot valve 81 is adjusted by controlling the power supply to the coil 95. At the time of a soft mode in which power is supplied to the coil 95 with a low current value, the biasing force of the spring disk 113 and the thrust force generated by a plunger 96 are balanced, and the valve body 85 is kept in a state of being separated from the seat portion 83 by a predetermined distance.

The plunger 96 is coupled with the outer periphery of the actuation rod 92. The plunger 96 generates the thrust force according to power supply to the coil 95. The actuation rod 92 is guided vertically (axially) by a bush 100 attached in a core cover member 106 and a bush 110 attached to the core 99. A rod inner passage 97 is formed inside the actuation rod 92.

A seal member 116 seals between the lower end portion of the bottomed cylindrical yoke 94 and the core 99. An annular passage 117 is formed among the piston bolt 5, the yoke 94, and the core 99. The annular passage 117 is in communication with the second valve block chamber 122B via a passage 118 provided in the cylindrical portion 8 of the piston bolt 5. A spool back-pressure chamber 101 is formed inside the core 99 (on the outer periphery of the head portion 87 of the valve spool 82). The spool back-pressure chamber 101 is in communication with a rod back-pressure chamber 103 via a cutout 93 of the head portion 87 of the valve spool 82 and the rod inner passage 97.

The yoke 94 includes a cable insertion hole 142. A cable 141 is inserted through the insertion hole 142. The respective conductors of electric wires 143 and 144 on one end side of the cable 141 are connected to terminals 145 and 146 of the solenoid 90, respectively. The terminal 145 is connected to a positive terminal of the coil 95, and the terminal 146 is connected to a negative terminal of the coil 95. Further, the electric wires 143 and 144 of the cable 141 on the opposite end side are connected to a connector (not illustrated) of the vehicle side (a power supply apparatus side).

As illustrated in Fig. 1, an injection port 151 is provided on an outer surface 150 of the valve block 120. The injection port 151 is used in a process of injecting the hydraulic fluid. A third communication passage 152 is provided in the valve block 120. The third communication passage 152 establishes communication of the injection port 151 with the first valve block chamber 122A and the second valve block chamber 122B. A plug (not illustrated) is attached to the injection port 151 after the hydraulic fluid is injected into the first valve block chamber 122A and the second valve block chamber 122B via the third communication passage 152.

The third communication passage 152 includes a third passage 155 connected to the injection port 151 at one end thereof. The third communication passage 152 includes a first passage 153 and a second passage 154. One end of the first passage 153 is connected to the first valve block chamber 122A, and the opposite end thereof is connected to the opposite end of the third passage 155. One end of the second passage 154 is connected to the second valve block chamber 122B, and the opposite end thereof is connected to the opposite end of the third passage 155 and the opposite end of the first passage 153. The injection port 151 is in communication with the first cylinder chamber 2A (the lower chamber) via the third passage 155, the first passage 153, the first valve block chamber 122A, and the first communication passage 127. Further, the injection port 151 is in communication with the second cylinder chamber 2B (the upper chamber) via the third passage 155, the second passage 154, the second valve block chamber 122B, and the second communication passage 128.

A third check valve 158 is provided in the third passage 155. The third check valve 158 permits a flow of the hydraulic fluid from the injection port 151 to the first passage 153 and the second passage 154. A first check valve 156 is provided in the first passage 153. The first check valve 156 permits a flow of the hydraulic fluid from the third passage 155 to the first valve block chamber 122A. A second check valve 157 is provided in the second passage 154. The second check valve 157 permits a flow of the hydraulic fluid from the third passage 155 to the second valve block chamber 122B.

The first check valve 156 includes a valve spring 156A (a first biasing unit), which biases the valve body in a valve-closing direction. The second check valve 157 includes a valve spring 157A (a second biasing unit), which biases the valve body in a valve-closing direction. The biasing force of the valve spring 156A is stronger than the biasing force of the valve spring 157A. Accordingly, in the process of injecting the hydraulic fluid via the third communication passage 152 into the valve block 120, an increase in the injection pressure of the hydraulic fluid first causes the second check valve 157 to be opened against the biasing force of the valve spring 157A, and the first check valve 156 to be opened against the biasing force of the valve spring 156A after that.

Next, a flow of the hydraulic oil in the above-described shock absorber 1 will be described.

During a compression stroke, the hydraulic fluid in the first cylinder chamber 2A (the lower chamber) is introduced into the first valve block chamber 122A of the valve block 120 via the first communication passage 127. The hydraulic fluid introduced in the first valve block chamber 122A is introduced into the first back-pressure chamber 55 via the passage 132, the cutout (the orifice) of the disk valve 70, the cutouts 72 of the piston 131, the annular passage 71, the radial passage 58, the axial passage 12, the radial passage 64, the width-across-flats portion 77 of the shaft portion 6 of the piston bolt 5, the annular passage 68, and the cutout (the orifice) of the check valve 63.

Further, during the compression stroke, the hydraulic fluid introduced in the first valve block chamber 122A is introduced into the second back-pressure chamber 25 via the second back-pressure introduction passage, i.e., the back-pressure introduction passage 171, and the check valve 33. As a result, the second main valve 23 is prevented from being opened under the pressure in the first valve block chamber 122A during the compression stroke.

The hydraulic fluid introduced in the second back-pressure chamber 25 flows into the second valve block chamber 122B via the cutout (the orifice) of the check valve 33, the annular passage 38, the radial passage 39, the axial passage 14, the radial passage 34, the annular passage 41, the cutouts 42 of the piston 131, the disk valve 40, and the passage 133. As a result, a damping force according to an orifice characteristic derived from the check valves 33 and 63 and the cutout of the disk valve 70 and a valve characteristic derived from the disk 40 can be acquired before the first main valve 53 is opened, i.e., in a region where the piston speed is a low speed.

On the other hand, during an extension stroke, the hydraulic fluid in the second cylinder chamber 2B (the upper chamber) is introduced into the second valve block chamber 122B of the valve block 120 via the second communication passage 128. The hydraulic fluid introduced in the second valve block chamber 122B is introduced into the second back-pressure chamber 25 via the passage 133, the cutout (the orifice) of the disk valve 40, the cutouts 42 of the piston 131, the annular passage 41, the radial passage 34, the axial passage 14, the radial passage 39, the annular passage 38, and the cutout (the orifice) of the check valve 33.

Further, during the extension stroke, the hydraulic fluid introduced in the second valve block chamber 122B is introduced into the first back-pressure chamber 55 via the first back-pressure introduction passage, i.e., the back-pressure introduction passage 181, and the check valve 63. As a result, the first main valve 53 is prevented from being opened under the pressure in the second valve block chamber 122B during the extension stroke.

The hydraulic fluid introduced in the first back-pressure chamber 55 flows into the first valve block chamber 122A via the cutout (the orifice) of the check valve 63, the annular passage 68, the radial passage 64, the axial passage 12, the radial passage 58, the annular passage 71, the cutouts 72 of the piston 131, the disk valve 70, and the passage 132. As a result, a damping force according to an orifice characteristic derived from the check valves 33 and 63 and the cutout of the disk valve 40 and a valve characteristic derived from the disk 70 can be acquired before the second main valve 23 is opened, i.e., in a region where the piston speed is a low speed.

Next, a method for manufacturing the above-described shock absorber 1 will be described. In this description, a process of introducing the hydraulic fluid will be mainly described.

First, the cylinder 2 and the valve block 120 are mounted into or onto the outer tube 10. The base valve 45 is attached to the cylinder 2 in advance. After the cylinder 2 and the valve block 120 are mounted into or onto the outer tube 10, the piston 3, the piston rod 17, the rod guide 15, and the like are mounted into or onto the cylinder 2.

Next, the damping force variable mechanism 130 is mounted in the valve block 120. Due to that, the inside of the cylinder 122 of the valve block 120 is partitioned by the piston 131 into the two chambers, the first valve block chamber 122A in communication with the first cylinder chamber 2A (the lower chamber) in the cylinder 2 via the first communication passage 127 and the second valve block chamber 122B in communication with the second cylinder chamber 2B (the upper chamber) in the cylinder 2 via the second communication passage 128.

Next, the hydraulic fluid is injected from the injection port 151 of the valve block 120. The hydraulic fluid injected from the injection port 151 causes the second check valve 157 to be opened against the biasing force of the valve spring 157A (the second biasing unit), and is introduced into the second valve block chamber 122B via the third passage 155 and the second passage 154.

The hydraulic fluid introduced in the second valve block chamber 122B flows into the second cylinder chamber 2B via the second communication passage 128 and fills the second cylinder chamber 2B. Further, the hydraulic fluid introduced in the second valve block chamber 122B fills the second back-pressure chamber 25 by being fed thereto via the passage 133 and the control passage 11. Further, the hydraulic fluid introduced in the second valve block chamber 122B fills the first chamber 135 by being fed thereto via the passage 118 and the annular passage 117.

When the pressure of the hydraulic fluid flowing in the third communication passage 152 (the third passage 155) reaches a pressure for opening the first check valve 156, the first check valve 156 is opened against the biasing force of the valve spring 156A (the first biasing unit) and the hydraulic fluid is introduced into the first valve block chamber 122A via the third passage 155 and the first passage 153.

The hydraulic fluid introduced in the first valve block chamber 122A flows into the first cylinder chamber 2A via the first communication passage 127 and fills the first cylinder chamber 2A. Further, the hydraulic fluid introduced in the first valve block chamber 122A fills the first back-pressure chamber 55 by being fed thereto via the passage 132 and the control passage 11. Further, the hydraulic fluid introduced in the first valve block chamber 122A fills the second chamber 136 by being fed thereto via the passage 132, the control passage 11, and the width-across-flats portion 77 of the shaft portion 6 of the piston bolt 5.

Then, in the conventional shock absorber, the hydraulic fluid injected in the valve block flows from the extension-side damping force generating mechanism into the reservoir chamber via the communication pipe and the compression-side damping force generating mechanism. Therefore, the air inside the damping force generating mechanism is not discharged and makes it difficult to increase the filling rate of the hydraulic fluid inside the valve block (the damping force generating mechanism), and the air removal takes time.

On the other hand, in the first embodiment, the injection port 151 is provided on the outer surface 150 of the valve block 120. Then, the communication is established between the injection port 151 and the first valve block chamber 122A via the third passage 155 and the first passage 153 (the third communication passage 152), while the communication is established between the injection portion 151 and the second valve block chamber 122B via the third passage 155 and the second passage 154 (the third communication passage 152).

According to the first embodiment, the hydraulic fluid can be directly injected from the injection port 151 into the first valve block chamber 122A and the second valve block chamber 122B, and the air inside the damping force variable mechanism 130 can be smoothly discharged. As a result, the filling rate of the hydraulic fluid inside the valve block 120 (the damping force variable mechanism 130) can be increased, and the time required to remove the air in the valve block 120 can be significantly reduced.

Further, the first embodiment causes the valve spring 156A (the biasing unit) of the first check valve 156 to exert a stronger biasing force than the biasing force of the valve spring 157A (the biasing unit) of the second check valve 157, thereby allowing the hydraulic fluid to fill the first valve block chamber 122A after filling the second valve block chamber 122B. As a result, the first embodiment allows the air inside the damping force variable mechanism 130 to be further smoothly discharged, thereby further increasing the filling rate of the hydraulic fluid inside the valve clock 120 (the damping force variable mechanism 130).

Alternatively, the first embodiment may be configured to cause the valve spring 157A (the biasing unit) of the second check valve 157 to exert a stronger biasing force than the biasing force of the valve spring 167A (the biasing unit) of the first check valve 156, thereby causing the hydraulic fluid to fill the second valve block chamber 122B after filling the first valve block chamber 122A.

### (Second Embodiment)

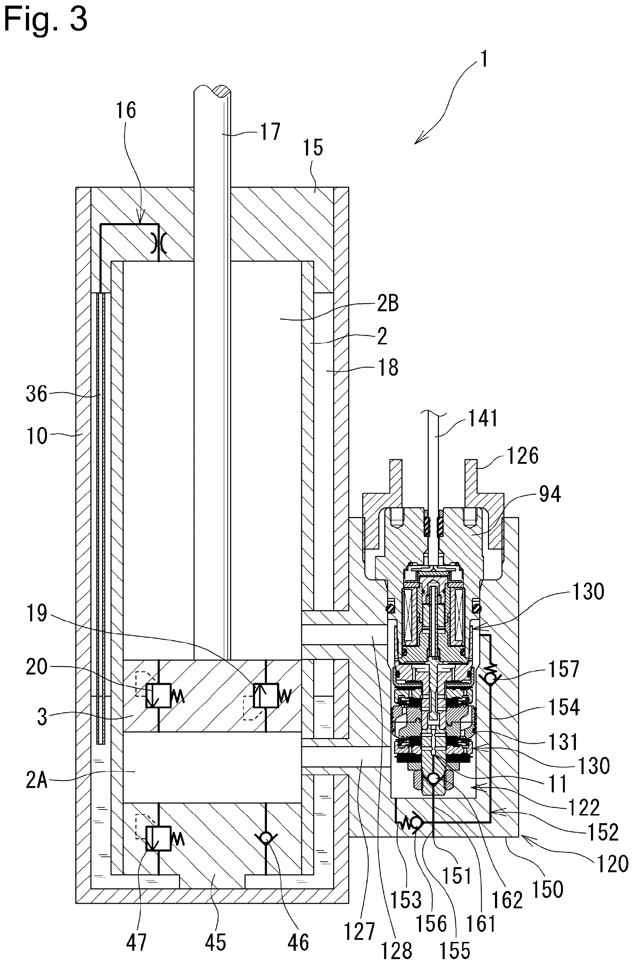

Next, a second embodiment will be described with reference to Fig. 3. The second embodiment will be described here, focusing on differences from the first embodiment. The second embodiment will be described, assigning the same names and reference numerals to configurations shared with the first embodiment.

In the first embodiment, the third communication passage 152 is constituted by the third passage 155 having the one end connected to the injection port 151, the first passage 153 having the one end connected to the first valve block chamber 122A and the opposite end connected to the opposite end of the third passage 155, and the second passage 154 having the one end connected to the second valve block chamber 122B and the opposite end connected to the opposite end of the third passage 155.

Due to that, the hydraulic fluid injected from the injection port 151 is introduced into the first back-pressure chamber 55 via the third communication passage 152, the first valve block chamber 122A, the passage 132, the cutout (the orifice) formed on the disk valve 70, and the control passage 11. On the other hand, the hydraulic fluid injected from the injection port 151 is introduced into the second back-pressure chamber 25 and the pilot chamber (the axial passage 13) via the third communication passage 152, the second valve block chamber 122B, the passage 133, the cutout (the orifice) formed on the disk valve 40, and the control passage 11.

On the other hand, in the second embodiment, the third communication passage 152 is constructed with a fourth passage 161 provided thereto. The fourth passage 161 establishes communication of the first passage 153, the second passage 154, and the third passage 155 with the control passage 11. A fourth check valve 162 is provided in the fourth passage 161. The fourth check valve 162 permits a flow of the hydraulic fluid from the injection port 151 (the third passage 155) to the control passage 11. Referring to Fig. 3, no check valve is provided in the third passage 155 in the second embodiment, but the third communication passage 152 may be constructed with the third check valve 158 provided in the third passage 155 similarly to the first embodiment (refer to Fig. 1).

According to the second embodiment, the hydraulic fluid injected from the injection port 151 can be directly injected into the control passage 11 without the intervention of the first valve block chamber 122A and the second valve block chamber 122B, and the hydraulic fluid can more easily reach the pilot chamber (the axial passage 13, refer to Fig. 2) (the air in the pilot chamber can be more easily discharged) and the filling rate in the pilot chamber can be further increased compared to the first embodiment.

The present invention shall not be limited to the above-described embodiments, and includes various modifications. For example, the above-described embodiments have been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each embodiment can also be implemented with another configuration added, deleted, or replaced with respect to a part of the configuration of this embodiment.

The present application claims priority under the Paris Convention to Japanese Patent Application No. 2021-088437 filed on May 26, 2021. The entire disclosure of Japanese Patent Application No. 2021-088437 filed on May 26, 2021 including the specification, the claims, the drawings, and the abstract is incorporated herein by reference in its entirety.

### REFERENCE SIGNS LIST

- 1: shock absorber
- 2: cylinder
- 3: piston
- 10: outer tube
- 18: reservoir (reservoir chamber)
- 2A: first cylinder chamber
- 2B: second cylinder chamber
- 17: piston rod
- 120: valve block
- 122A: first valve block chamber
- 122B: second valve block chamber
- 127: first communication passage
- 128: second communication passage
- 130: damping force variable mechanism
- 150: outer surface (of the valve block)
- 156: first check valve
- 157: second check valve

## Claims

1. A shock absorber comprising:
an outer tube;
a cylinder provided in the outer tube and filled with hydraulic fluid therein;
an annular reservoir provided between the cylinder and the outer tube and sealingly containing the hydraulic fluid and gas therein;
a piston slidably provided in the cylinder and partitioning an inside of the cylinder into two chambers, a first cylinder chamber and a second cylinder chamber;
a piston rod having one end at which the piston is provided and an opposite end side protruding out of the cylinder;
a valve block provided on an outer surface of the outer tube and hollowly formed therein;
a damping force variable mechanism partitioning an inside the valve block into two hydraulic chambers, a first valve block chamber and a second valve block chamber, and configured to generate a damping force by controlling a flow of the hydraulic fluid that is generated due to a movement of the piston;
a first communication passage establishing communication between the first cylinder chamber and the first valve block chamber;
a second communication passage establishing communication between the second cylinder chamber and the second valve block chamber;
a third communication passage establishing communication between an outer surface of the valve block and the first valve block chamber or the second valve block chamber;
a first check valve provided in the third communication passage and configured to permit a flow of the hydraulic fluid from the outer surface of the valve block to the first valve block chamber; and
a second check valve provided in the third communication passage and configured to permit a flow of the hydraulic fluid from the outer surface of the valve block to the second valve block chamber.

2. The shock absorber according to claim 1, wherein the first valve block chamber and the second valve block chamber are arranged in parallel with a central line of the cylinder.

3. The shock absorber according to claim 1 or 2, wherein the first check valve includes a first biasing unit configured to work in a valve-closing direction,
wherein the second check valve includes a second biasing unit configured to work in a valve-closing direction, and
wherein a biasing force of the first biasing unit is stronger than a biasing force of the second biasing unit.

4. The shock absorber according to any one of claims 1 to 3, wherein the damping force variable mechanism includes
a valve block piston partitioning the inside of the valve block into the first valve block chamber and the second valve block chamber,
a shaft member on which the valve block piston is mounted,
a control flow passage provided in the shaft member and establishing communication between the first valve block chamber and the second valve block chamber, and
a solenoid configured to control a flow rate of the hydraulic fluid flowing in the control flow passage, and
wherein the shock absorber includes a fourth passage that establishes communication of the first communication passage, the second communication passage, and the third communication passage with the control passage.

5. A method for manufacturing a shock absorber, the shock absorber including
an outer tube,
a cylinder provided in the outer tube and filled with hydraulic fluid therein,
an annular reservoir provided between the cylinder and the outer tube and sealingly containing the hydraulic fluid and gas therein,
a piston slidably provided in the cylinder and partitioning an inside of the cylinder into two chambers, a first cylinder chamber and a second cylinder chamber,
a piston rod having one end at which the piston is provided and an opposite end side protruding out of the cylinder,
a valve block provided on an outer surface of the outer tube and hollowly formed therein,
a damping force variable mechanism partitioning an inside the valve block into two hydraulic chambers, a first valve block chamber and a second valve block chamber, and configured to generate a damping force by controlling a flow of the hydraulic fluid that is generated due to a movement of the piston,
a first communication passage establishing communication between the first cylinder chamber and the first valve block chamber,
a second communication passage establishing communication between the second cylinder chamber and the second valve block chamber,
a third communication passage establishing communication between an outer surface of the valve block and the first valve block chamber or the second valve block chamber,
a first check valve provided in the third communication passage and configured to permit a flow of the hydraulic fluid from the outer surface of the valve block to the first valve block chamber, and
a second check valve provided in the third communication passage and configured to permit a flow of the hydraulic fluid from the outer surface of the valve block to the second valve block chamber,
the method for manufacturing the shock absorber comprising:
mounting the cylinder and the valve block into or onto the outer tube;
mounting the damping force variable mechanism into the valve block; and
injecting the hydraulic fluid via the third communication passage into the valve block.
